# EUROPEAN PATENT APPLICATION

(11) **EP 2 639 644 A2**
(43) Date of publication of application: **18.09.2013**
(21) Application number: 13158564.8
(22) Date of filing: 11.03.2013
(51) Int. Cl.: G03G 15/00

(54) **Image forming apparatus capable of issuing instruction to skip error and control method therefor**

(30) Priority: 12.03.2012 JP 2012054639
(71) Applicant: Canon Kabushiki Kaisha, Tokyo 146-8501 (JP)
(72) Inventor: Kawajiri, Kensuke, Tokyo, Tokyo 146-8501 (JP)
(74) Representative: TBK

(57) **Abstract**

An image forming apparatus which improves its usability. A receiving means receives, from a user, an instruction to skip an error that has occurred in the image forming apparatus. A setting means sets whether a specific error that is possibly occurred in the image forming apparatus is set as an error that can be skipped according to the instruction received by the receiving means. A notification means notifies, in a case where the specific error which has been set by the setting means as the error that can be skipped occurs, a user that the specific error can be skipped.

## Description

### BACKGROUND OF THE INVENTION

### Field of the Invention

The present invention relates to an image forming apparatus and a control method therefor.

### Description of the Related Art

Conventionally, for printing apparatuses and others that print out data, there has been known a technique that, when an error has occurred, a display indicating that the error has occurred is produced, and a printing-out process is suspended to wait for input of an instruction from an operator. Moreover, there has been known a technique that in the above case, printing is continued by a user instructing a printing apparatus to skip an error, depending on details of the error (see, for example, Japanese Laid-Open Patent Publication (Kokai) No. H07-81187).

There are known some printing apparatuses which are equipped with no display panel and only equipped with operation keys and LEDs. Such a printing apparatus is given instructions from an application on a PC connected to the printing apparatus via a network. Thus, an instruction to skip an error as described above can be given to the printing apparatus from the operation keys on the printing apparatus or from the application on the PC.

However, as for such a printing apparatus, the amount of information that can be given to a user differs between an application on a PC having high expressive power and a printing apparatus holding no display panel. For this reason, an application on a PC can express, for example, a warning that image quality may be degraded when an error is skipped, but this warning cannot be expressed by operation keys and LEDs on a printing apparatus.

Moreover, details of an error that has occurred cannot be informed to a user by expression power of operation keys and LEDs on a printing apparatus. For this reason, when various types of errors are allowed to be skipped, there may be cases where the user cannot determine whether or not an error that is currently occurring is an error for which the user should give an instruction to skip.

### SUMMARY OF THE INVENTION

The present invention provides an image forming apparatus which improves its usability and a control method therefor.

Accordingly, a first aspect of the present invention provides an image processing apparatus as specified in claims 1 to 6.

Accordingly, a second aspect of the present invention provides a control method for an image processing apparatus as specified in claim 7.

According to the present invention, because it can be clearly specified whether or not an error that has occurred can be skipped, usability of the image forming apparatus can be improved.

Further features of the present invention will become apparent from the following description of exemplary embodiments (with reference to the attached drawings).

### BRIEF DESCRIPTION OF THE DRAWINGS

FIG. 1 is a view schematically showing an arrangement of an image processing system including an image processing apparatus as an example of an image forming apparatus according to an embodiment of the present invention.

FIG. 2 is a diagram schematically showing a hardware arrangement of a PC appearing in FIG. 1.

FIG. 3 is a diagram schematically showing a hardware arrangement of the image processing apparatus appearing in FIG. 1.

FIG. 4 is a view showing an exemplary screen displayed on a display unit appearing in FIG. 2 by a UI application.

FIG. 5 is a view showing a list of statuses of the image processing apparatus appearing in FIG. 1.

FIG. 6 is a view showing an operation unit appearing in FIG. 3.

FIG. 7 is a view showing a management table stored in an NVMEM appearing in FIG. 3.

FIG. 8 is a flowchart showing the procedure of an operation unit control process carried out by a CPU appearing in FIG. 3.

FIG. 9 is a flowchart showing the procedure of an operation unit control process carried out by a CPU appearing in FIG. 2.

FIG. 10 is a view showing a variation of the management table stored in an NVMEM appearing in FIG. 3.

FIG. 11 is a view showing a skip process extension setting stored in the NVMEM appearing in FIG. 3.

FIG. 12 is a flowchart showing a variation of the procedure of the operation unit control process carried out by the CPU appearing in FIG. 3.

### DESCRIPTION OF THE EMBODIMENTS

The present invention will now be described in detail with reference to the drawings showing an embodiment thereof.

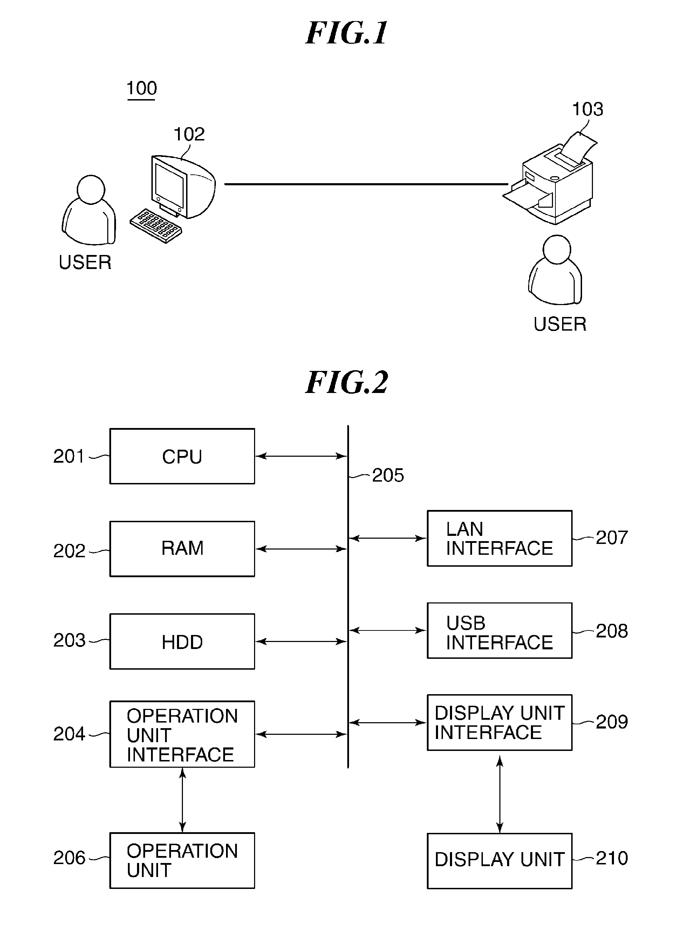

FIG. 1 is a view schematically showing an arrangement of an image processing system 100 including an image processing apparatus 103 as an example of an image forming apparatus according to an embodiment of the present invention.

Referring to FIG. 1, the image processing system 100 has the image processing apparatus (image forming apparatus) 103 and a PC 102. The image processing apparatus 103 and the PC 102 are connected together for communication with each other via a network such as a LAN, a USB, or the like. Alternatively, the image processing apparatus 103 and the PC 102 may be configured to be capable of wirelessly communicating with each other via a wireless LAN, Bluetooth, or the like.

By operating a UI application running on the PC 102, a user can configure desired settings on the image processing apparatus 103 and give desired instructions to the image processing apparatus 103. A description of the UI application will be given later. The UI application is capable of displaying statuses of the image processing apparatus 103. Also, the user can give various instructions to the image processing apparatus 103 by operating the UI application. Thus, the image processing apparatus 103 according to the present embodiment carries out image processing in accordance with instructions from the PC 102 which is a host apparatus.

FIG. 2 is a diagram schematically showing a hardware arrangement of the PC 102 appearing in FIG. 1.

Referring to FIG. 2, a CPU 201 is a processor that controls the entire PC 102. A RAM 202, which is a system work memory for operation of the CPU 201, is used as a program memory for storing programs. An HDD 203 is a nonvolatile storage device in which data or the like can be stored.

An operation unit 206 is keyboard, a mouse, or the like for receiving instructions from the user. An operation unit interface 204 is an interface between the operation unit 206 and the CPU 201 or the like. The operation unit interface 204 sends, to the CPU 201, information corresponding to operations performed by the user via the operation unit 206.

A display unit 210 is a display or the like that displays information for the user. A display unit interface 209, which is an interface between the display unit 210 and the CPU 201, outputs output signals to the display unit 210 in accordance with control performed by the CPU 201.

A USB interface 208, which is a unit for connecting to the image processing apparatus 103 via a USB, is used to obtain statuses of other image processing apparatuses and send back statuses via the USB.

A LAN interface 207, which is a unit for connecting to a LAN, is used to obtain statuses of other image processing apparatuses and send back statuses via the LAN. The components described above are connected together by a system bus 205.

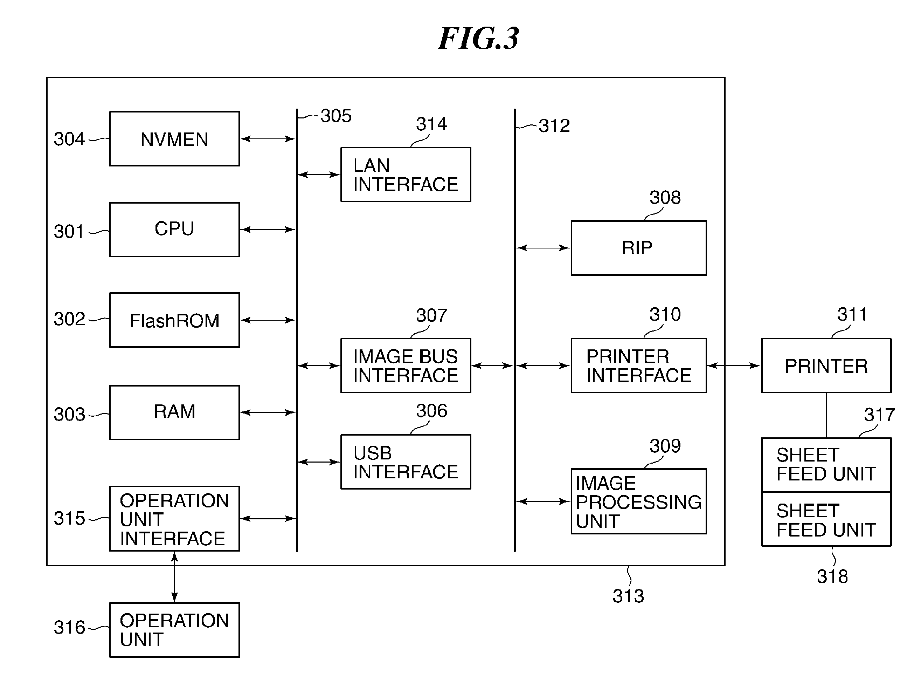

FIG. 3 is a diagram schematically showing a hardware arrangement of the image processing apparatus 103 appearing in FIG. 1.

Referring to FIG. 3, a control unit 313 has a CPU 301, a flash ROM 302, a RAM 303, an NVMEM 304, a USB interface 306, an image bus interface 307, a RIP 308, an image processing unit 309, a printer interface 310, a LAN interface 314, and an operation unit interface 315. The CPU 301 is a processor that controls the entire image processing apparatus 103. A RAM 303, which is a system work memory for operation of the CPU 301, is used as a program memory for storing programs and an image memory for temporarily storing image data.

The NVMEM 304 (storage unit) is a nonvolatile memory, in which management tables, to be described later, setting information, and so on are stored. The flash ROM 302 is a rewritable nonvolatile memory, in which various control programs for controlling the image processing apparatus 103 are stored.

The operation unit 316 has keys with which a user operates the image processing apparatus 103 and LEDs that indicate statuses of the image processing apparatus 103. The operation unit interface 315, which is an interface with the operation unit 316, sends control information on the LEDs which the operation unit 316 has. Also, the operation unit interface 315 sends, to the CPU 301, information corresponding to operations performed by the user.

Sheet feed units 317 and 318 hold sheets and supply sheets to the printer 311 when it performs printing. The USB interface 306 is an interface for connecting to the PC 102 via a USB. The LAN interface 314 is an interface for connecting to the PC 102 via a network (network communication means).

The CPU 301, RAM 303, NVMEM 304, flash ROM 302, operation unit interface 315, USB interface 306, LAN interface 314, and image bus interface 307 described above are connected together by a system bus 305.

The image bus interface 307 is a bus bridge that connects together the system bus 305 and an image bus 312 transferring image data at high speed, and converts data structures. The image bus 312 is comprised of a PCI bus or an IEEE 1394 bus.

The RIP (raster image processor) 308 decompresses vector data such as a PDL code into a bitmap image. The printer interface 310, which is an interface between the printer 311 and the controller unit 313, carries out synchronous-asynchronous conversion of image data.

The image processing unit 309 corrects, processes, and edits input image data and carries out correction of the printer 311, resolution conversion, and so on for image data to be printed. In addition, the image processing unit 309 rotates image data, carries out JPEG compression/decompression on multivalued image data, and carries out compression/decompression such as JBIG, MMR, or MH on binary-coded image data.

The printer 311 prints an image, which is represented by raster image data, on a sheet. Examples of a printing process include an electrophotographic process using a photosensitive drum or a photosensitive belt and an inkjet process in which ink is discharged from a minute nozzle array to directly print an image on a sheet, but any process can be used. A printing operation is started in response to an instruction from the CPU 301.

The RIP 308, printer interface 310, image bus interface 307, and image processing unit 309 described above are connected together by the image bus 312.

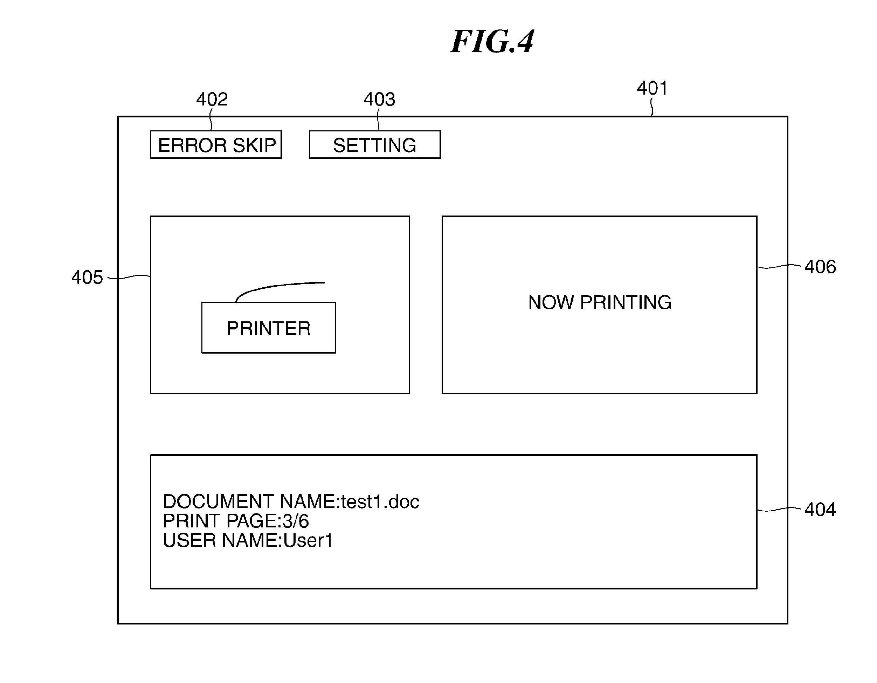

FIG. 4 is a view showing an exemplary screen 401 displayed on the display unit 210 appearing in FIG. 2 by a UI application.

The exemplary screen 401 in FIG. 4 is for performing operations on the image processing apparatus 103. The UI application is executed by the CPU 201 of the PC 102. The UI application is capable of communicating with the image processing apparatus 103 via the USB interface 208 or the LAN interface 207. When the user installs the UI application onto the PC 102, the UI application is associated with the image processing apparatus 103.

The exemplary screen 401 includes an error skip button 402, a setting button 403, a job execution state display field 404, an image processing apparatus state display field 405, and an image processing apparatus state explanation field 406. The image processing apparatus state display field 405 displays information corresponding to a status of the image processing apparatus 103 connected to the UI application. In the image processing apparatus state display field 405, an image such as an icon indicative of an appearance of the image processing apparatus 103 is displayed, and representations (color, shapes, and so on) of the image are changed according to statuses of the image processing apparatus 103. Statuses of the image processing apparatus 103 will be given later.

The image processing apparatus state explanation field 406 displays a text that represents a status of the image processing apparatus 103 connected to the UI application.

The job execution state display field 404 displays a printing state of a job being executed by the image processing apparatus 103 connected to the UI application. In the example shown in FIG. 4, data with a document name "test1.doc" is being printed in accordance with an instruction from the user, and it is indicated that printing of three pages among six pages has been completed. When the image processing apparatus 103 is not performing printing, nothing is displayed in the job execution state display field 404.

By operating the error skip button 402 using the operation unit 206, the user can skip an error, which is occurring in the image processing apparatus 103, to continue printing. The error skip button 402 is enabled only in statuses where printing can be continued by skipping an error.

Whether the image processing apparatus 103 is in a status where printing can be continued by skipping an error is determined by the CPU 301 of the image processing apparatus 103. The determination result is transmitted from the image processing apparatus 103 to the CPU 201 via the USB interface 208 or the LAN interface 207. The CPU 201 controls the UI application using the determination result.

By operating the setting button 403 using the operation unit 206, the user can change settings on the image processing apparatus 103. Operations performed when the setting button 403 is operated will be described later.

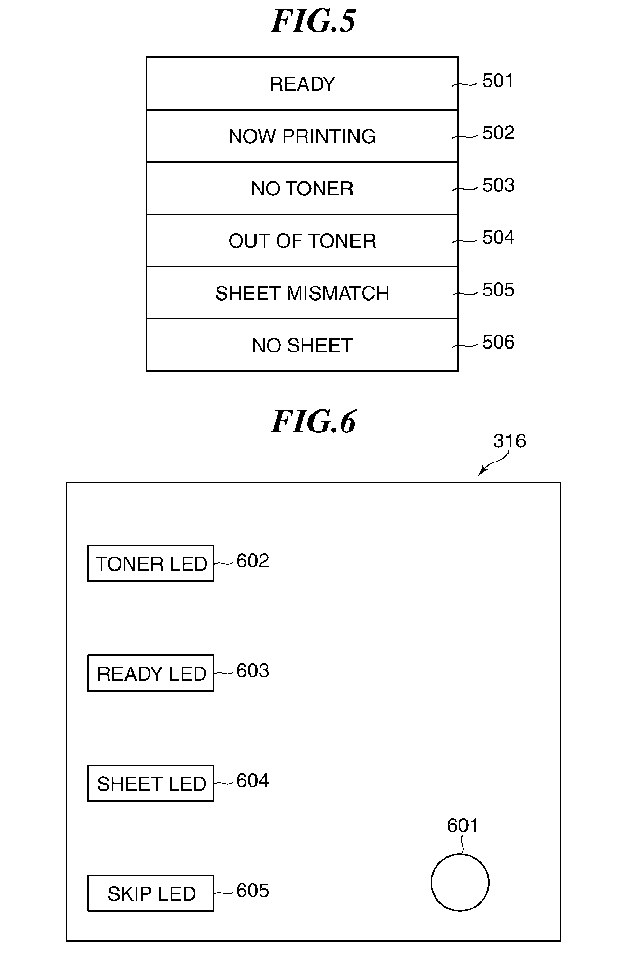

FIG. 5 is a view showing a list of statuses of the image processing apparatus 103 appearing in FIG. 1.

Referring to FIG. 5, the list shows various statuses indicative of details of errors occurring in the image processing apparatus 103 or states of the image processing apparatus 103.

Among them, ready 501 indicates a state in which the image processing apparatus 103 is ready to perform printing. Now printing 502 indicates a state in which the image processing apparatus 103 is performing printing. No toner 503 indicates a state in which no toner cartridge is set in the image processing apparatus 103.

Out of toner 504 indicates a status in which printing quality cannot be ensured due to the amount of remaining toner being small. Sheet mismatch 505 indicates a state in which the size of sheets held in the sheet feed units 317 and 318 and the size of sheets specified for printing do not mach. No sheet 506 indicates a state in which there are no sheets in the sheet feed units 317 and 318.

FIG. 6 is a view showing the operation unit 316 appearing in FIG. 3. The operation unit 316 has a skip button 601 (receiving means), a toner LED 602, a ready LED 603, a sheet LED 604, and a skip LED 605.

Referring to FIG. 6, the toner LED 602 lights up when the image processing apparatus 103 has no toner 503 or is out of toner 504.

The ready LED 603 lights up when the image processing apparatus 103 is ready 501 or now printing 502.

The sheet LED 604 lights up when the status of the image processing apparatus 103 is sheet mismatch 505 or no sheet 506.

The skip LED 605 lights up when the image processing apparatus 103 is a status in which printing can be continued by the user depressing the skip button 601 to skip an error (notification means). Whether or not printing can be continued by skipping an error is determined by the CPU 301, and the determination result is informed to the operation unit 316 via the operation unit interface 315. The skip LED 605 is an exemplary specifying unit that is turned on or off to clearly specify for the user whether or not an error that has occurred can be skipped.

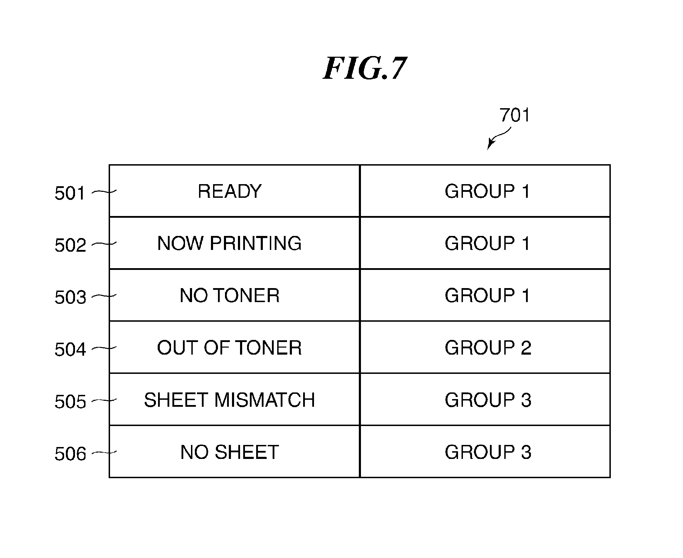

FIG. 7 is a view showing a management table 701 stored in the NVMEM 304 appearing in FIG. 3.

Referring to FIG. 7, the management table 701 shows the correspondence relationship between various statuses indicative of the states of the image processing apparatus 103 described above with reference to FIG. 5 and groups to which the statuses belong.

Specifically, in the management table 701, the statuses are divided into a group 1, a group 2, and a group 3.

Ready 501, now printing 502, and no toner 503 belong to the group 1. Out of toner 504 belongs to the group 2. Sheet mismatch 505 and no sheet 506 belong to the group 3.

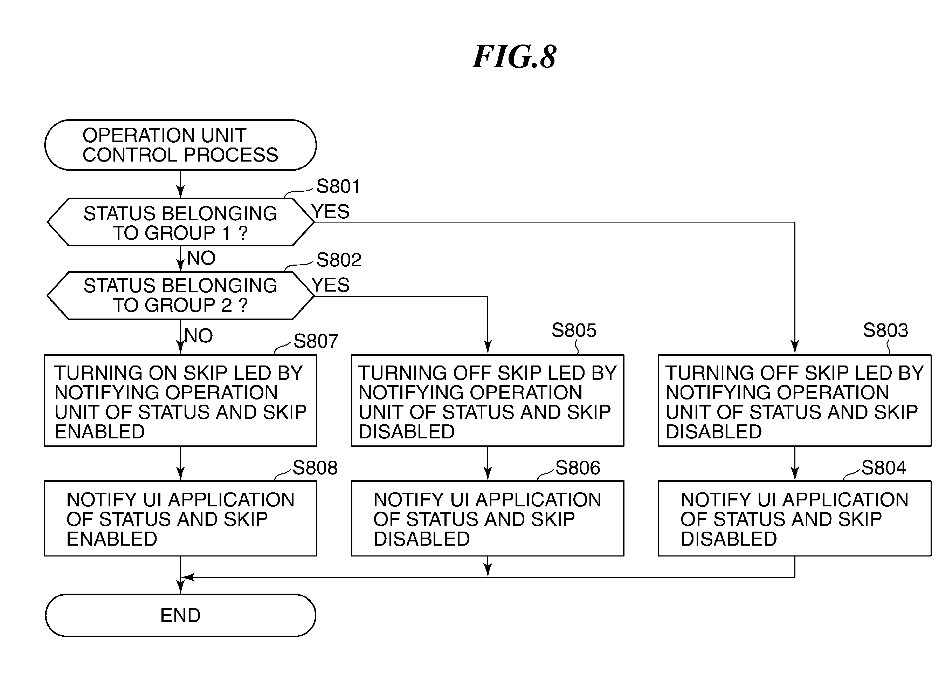

FIG. 8 is a flowchart showing the procedure of an operation unit control process carried out by the image processing apparatus 103 according to the present embodiment. Steps in this flowchart are processed by the CPU 301 appearing in FIG. 3 expanding programs, which are stored in memory such as the NVMEM 304 and the flash ROM 302, onto the RAM 303 and executing the same.

Referring to FIG. 8, when a change occurs in the status of the image processing apparatus 103, the CPU 301 determines first whether or not the present status belongs to the group 1 (step S801). When, as a result of the determination in the step S801, the status belongs to the group 1 (YES in the step S801), the CPU 301 causes the operation unit 316 to turn off the skip LED 605 by notifying the operation unit 316 of the present status and skip disabled indicating that an error cannot be skipped (step S803). Here, not only the skip LED 605 is turned off, but also an LED corresponding to the present status lights up. When the skip LED 605 has not lighted up, turning-off of the skip LED 605 encompasses continuation of this state.

The CPU 301 then notifies the UI application of the PC 102 of the present status and skip disabled (step S804) and terminates the present process.

On the other hand, when, as a result of the determination in the step S801, the status does not belong to the group 1 (NO in the step S801), the CPU 301 determines whether or not the status belongs to the group 2 (step S802). When, as a result of the determination in the step S802, the status belongs to the group 2 (YES in the step S802), the CPU 301 notifies the operation unit 316 of the present status and skip disabled (step S804), thus causing the operation unit 316 to turn off the skip LED 605 (step S805). Here, the CPU 301 causes the operation unit 316 to not only turn off the skip LED 605 but also turn on an LED corresponding to the present status.

The CPU 301 then notifies the UI application of the PC 102 of the present status and skip disabled (step S806) and terminates the present process.

On the other hand, when, as a result of the determination in the step S802, the status does not belong to the group 2 (NO in the step S802), the CPU 301 notifies the operation unit 316 of the present status and skip enabled that an error can be skipped, thus causing the operation unit 316 to turn on the skip LED 605 (step S807). Here, the CPU 301 causes the operation unit 316 to not only turn on the skip LED 605 but also turn on an LED corresponding to the present status.

The CPU 301 then notifies the UI application of the PC 102 of the present status and skip enabled (step S808) and terminates the present process.

The steps S801 and S802 described above correspond to an exemplary determination unit that, when a change occurs in the status of the image processing apparatus 103, determines whether or not an error that has occurred can be skipped according to a group to which the present status belongs.

Also, the steps S803, S805, and S807 described above correspond to an exemplary specifying control unit that controls the skip LED 605 according to the result of determination in the step S801 or S802. Further, the steps S804, S806, and S808 correspond to an exemplary notification unit that informs the result of determination in the step S801 or S802 to the PC 102 which is a host apparatus.

According to the process in FIG. 8, when a change occurs in the status of the image processing apparatus 103, whether or not an error that has occurred can be skipped is determined according to a group to which the present status belongs (steps S801 and S802). Then, the skip LED 605 is controlled according to the result of determination (steps S803, S805, and S807). Next, the PC 102 is notified of the determination result (steps S804, S806, and S808). As a result, it is clearly specified for the user whether or not an error that has occurred can be skipped, and hence usability of the image processing apparatus 103 when the error has occurred can be improved.

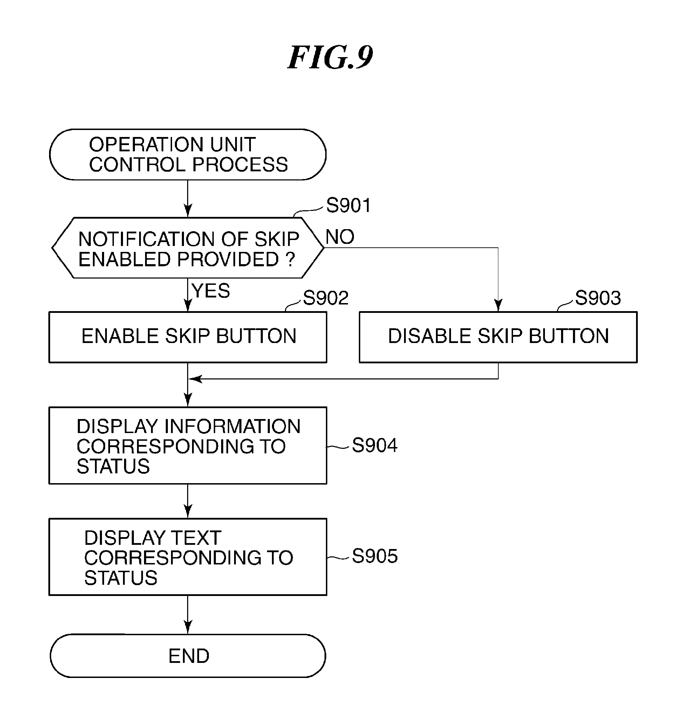

FIG. 9 is a flowchart showing the procedure of an operation unit control process carried out by the PC 102. Steps in FIG. 9 are processed by the CPU 201 appearing in FIG. 2 expanding programs, which are stored in the HDD 203 or the like, onto the RAM 202 and executing the same.

Referring to FIG. 9, the CPU 201 determines whether or not notification of skip enabled has been provided from the image processing apparatus 103 (step S901). When, as a result of the determination in the step S901, notification of skip enabled has not been provided, that is, notification of skip disabled has been provided (NO in the step S901), the CPU 201 disables the error skip button 402 (step S903) and proceeds to step S904.

On the other hand, when, as a result of the determination in the step S901, notification of skip enabled has been provided (YES in the step S901), the CPU 201 enables the error skip button 402 (step S902).

Then, information corresponding to the status informed by the image processing apparatus 103 is displayed on the image processing apparatus state display field 405 (step S904), and a text that represents the status is displayed on the image processing apparatus state explanation field 406 (step S905), followed by termination of the present process.

Although various statuses appearing in FIG. 5 described above are divided into three groups in the management table 701 appearing in FIG. 7, these statuses may be divided into not only three groups but also a plurality of other groups.

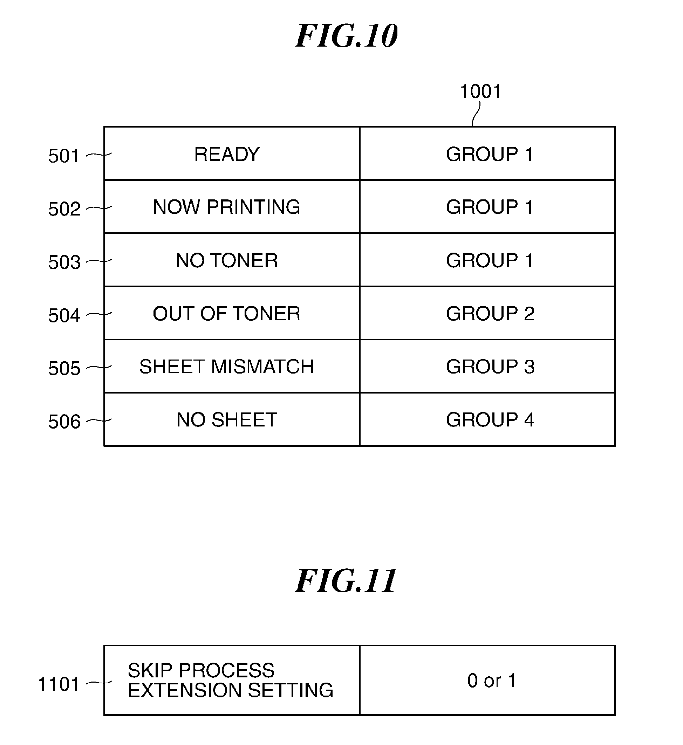

FIG. 10 is a view showing a variation of the management table stored in the NVMEM 304 appearing in FIG. 3.

The management table 1001 appearing in FIG. 10 include the same statuses as those appearing in FIG. 5. As distinct from the management table 701 in FIG. 7, the statuses in the management table 1001 are divided into four groups consisting of a group 1, a group 2, a group 3, and a group 4.

Ready 501, now printing 502, and no toner 503 belong to the group 1. Out of toner 504 belongs to the group 2. Sheet mismatch 505 belongs to the group 3. No sheet 506 belongs to the group 4.

FIG. 11 is a view showing a skip process extension setting 1101 stored in the NVMEM 304 appearing in FIG. 3.

Referring to FIG. 11, the skip process extension setting 1101 is configured at 0 or 1. The skip process extension setting 1101 is a setting that indicates whether or not an error that has occurred can be skipped when a status belongs to a group determined in advance and is for extending targets which can be skipped. Control is provided such that when the skip process extension setting 1101 is configured at 0, skip is disabled, and when the skip process extension setting 1101 is configured at 1, skip is enabled (setting means).

Whether or not an error that has occurred can be skipped is determined using an extension setting table as well.

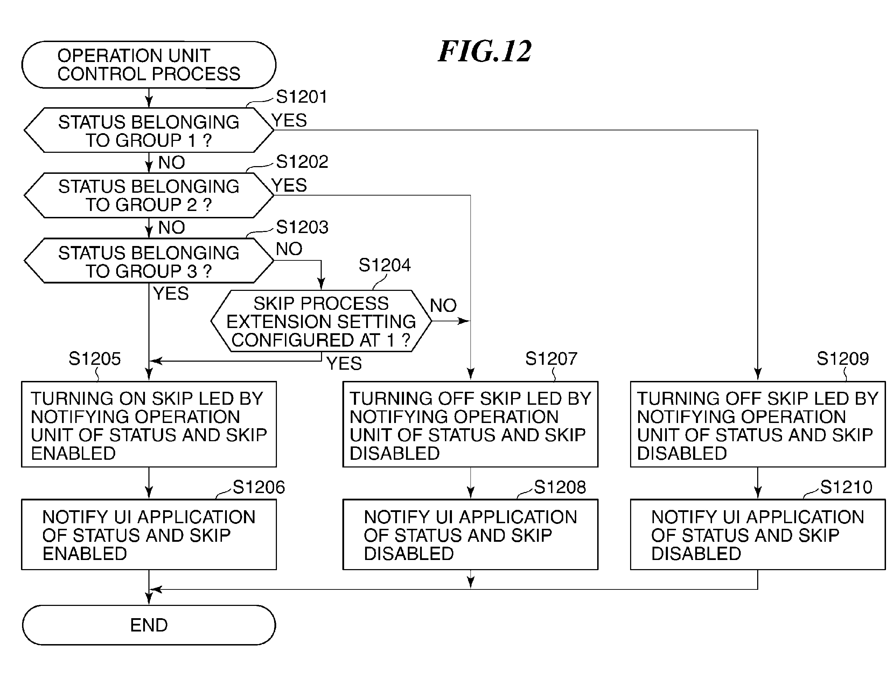

FIG. 12 is a flowchart showing a variation of the procedure of the operation unit control process carried out by the image processing apparatus 103 according to the present embodiment. Steps in this flowchart are processed by the CPU 301 (execution means) appearing in FIG. 3 expanding programs, which are stored in memory such as the NVMEM 304 and the flash ROM 302, onto the RAM 303 and executing the same.

Referring to FIG. 12, when a change occurs in status, the CPU 301 determines first whether or not the status belongs to the group 1 (step S1201). When, as a result of the determination in the step S1201, the status belongs to the group 1 (YES in the step S1201), the CPU 301 causes the operation unit 316 to turn off the skip LED 605 by notifying the operation unit 316 of the present status and skip disabled (step S1209). Here, not only the skip LED 605 is turned off, but also an LED corresponding to the present status lights up.

The CPU 301 then notifies the UI application of the PC 102 of the present status and skip disabled (step S1210) and terminates the present process.

On the other hand, when, as a result of the determination in the step S1201, the status does not belong to the group 1 (NO in the step S1201), the CPU 301 determines whether or not the status belongs to the group 2 (step S1202). When, as a result of the determination in the step S1202, the status belongs to the group 2 (YES in the step S1202), the CPU 301 notifies the operation unit 316 of the present status and skip disabled, thus causing the operation unit 316 to turn off the skip LED 605 (step S1207). Here, the CPU 301 causes the operation unit 316 to not only turn off the skip LED 605 but also turn on an LED corresponding to the present status.

The CPU 301 then notifies the UI application of the PC 102 of the present status and skip disabled (step S1208) and terminates the present process.

On the other hand, when, as a result of the determination in the step S1202, the status does not belong to the group 2 (NO in the step S1202), the CPU 301 determines whether or not the status belongs to the group 3 (step S1203).

When, as a result of the determination in the step S1203, the status belongs to the group 3 (YES in the step S1203), the CPU 301 notifies the operation unit 316 of the present status and skip enabled indicating that an error can be skipped, thus causing the operation unit 316 to turn on the skip LED 605 (step S1205). Here, the CPU 301 causes the operation unit 316 to not only turn on the skip LED 605 but also turn on an LED corresponding to the present status.

The CPU 301 then notifies the UI application of the PC 102 of the present status and skip enabled (step S1206) and terminates the present process.

When, as a result of the determination in the step S1203, the status does not belong to the group 3 (NO in the step S1203), the CPU 301 determines that the status belongs to the group 4 and determines whether or not the skip process extension setting 1101 is configured at 1 (step S1204).

When, as a result of the determination in the step S1204, the skip process extension setting 1101 is configured at 0 (NO in the step S1204), the CPU 301 proceeds to the step S1207.

On the other hand, when, as a result of the determination in the step S1204, the skip process extension setting 1101 is configured at 1 (YES in the step S1204), the CPU 301 proceeds to the step S1205.

### Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
An image forming apparatus which improves its usability. A receiving means receives, from a user, an instruction to skip an error that has occurred in the image forming apparatus. A setting means sets whether a specific error that is possibly occurred in the image forming apparatus is set as an error that can be skipped according to the instruction received by the receiving means. A notification means notifies, in a case where the specific error which has been set by the setting means as the error that can be skipped occurs, a user that the specific error can be skipped.

## Claims

1. An image forming apparatus, comprising:
a receiving means (601) for receiving, from a user, an instruction to skip an error that has occurred in the image forming apparatus;
a setting means (1101) for setting whether a specific error that occurs in the image forming apparatus is set as an error that can be skipped according to the instruction received by said receiving means (601); and
a notification means(605) for notifying, in a case where the specific error which has been set by said setting means (1101) as the error that can be skipped occurs, the user that the specific error can be skipped.

2. An image forming apparatus according to claim 1, wherein said notification means (605) comprises a light emitting unit and notifies that the specific error can be skipped by turning on or off the light emitting unit.

3. An image forming apparatus according to claim 2, wherein said notification means (605) comprises an LED.

4. An image forming apparatus according to claim 1, wherein the specific error includes an error relating to a sheet.

5. An image forming apparatus according to claim 1, further comprising an execution means (506) for skipping, in a case where the specific error which has been set by said setting means (1101) as the error that can be skipped occurs, the specific error to execute printing in response to receipt of the instruction by said receiving means (601).

6. An image forming apparatus according to claim 1, further comprising a network communication means (301) for notifying, in a case where the specific error which has been set by said setting means (1101) as the error that can be skipped occurs, an external device connected to the image forming apparatus via a network that the specific error can be skipped.

7. A control method for an image forming apparatus, comprising:
receiving, from a user, an instruction to skip an error that has occurred in the image forming apparatus;
setting whether a specific error that occurs in the image forming apparatus is set as an error that can be skipped according to the instruction received in said receiving; and
notifying, in a case where the specific error which has been set in said setting as the error that can be skipped occurs, the user that the specific error can be skipped.
